# EUROPEAN PATENT SPECIFICATION

(11) **EP 2 219 329 B1**
(45) Date of publication and mention of the grant of the patent: **14.03.2012**
(21) Application number: 08854134.7
(22) Date of filing: 07.11.2008
(51) Int. Cl.: H04L 12/56

(54) **A FAST REROUTE METHOD AND A LABEL SWITCH ROUTER**
SCHNELLUMLEITUNGSVERFAHREN UND LABEL SWITCH ROUTER
PROCÉDÉ DE RÉACHEMINEMENT RAPIDE ET ROUTEUR DE COMMUTATION D'ÉTIQUETTES

(30) Priority: 09.11.2007 CN 200710177133
(43) Date of publication of application: 18.08.2010
(73) Proprietor: Huawei Technologies Co., Ltd., Longgang District, Shenzhen Guangdong 518129 (CN)
(72) Inventor: KUMAR, Amit, Shenzhen Guangdong 518129 (CN)
(74) Representative: Pfenning, Meinig & Partner GbR
(86) International application number: PCT/CN2008/072985
(87) International publication number: WO 2009/067906

(56) References cited:
- CN-A- 1 738 286
- CN-A- 1 816 040
- CN-A- 1 921 456
- CN-A- 1 921 456
- KR-A- 20030 001 635
- US-A1- 2006 126 496
- US-A1- 2007 070 909

## Description

### FIELD OF THE INVENTION

The present invention relates to the communication technology, and more specifically, to a method and label switching router for fast rerouting.

### BACKGROUND

Fast ReRoute (FRR) is a mechanism for providing protection for link failure or node failure on the Label Switching Path (LSP) of Multi-Protocol Label Switch (MPLS) Traffic Engineering by means of providing local protection when failure occurs at a certain place on the label switching path. It allows attempting to establish a new end-to-end LSP at a head-end node to replace an old LSP. Before the new LSP is successfully established, the data may continue to pass through the old LSP. Fast ReRoute locally repairs LSPs protected by rerouting the LSPs to bypass tunnels which bypass failed links or failed nodes. The bypass tunnels which bypass failed links provide link protection. The bypass tunnels which bypass failed nodes provide node protection. These bypass tunnels are established and be binded with the LSPs protected before a network element fails. Hence, when the network element fails, traffic may be rapidly switched to the already existing bypass tunnel.

US2006/126496A1 discloses a fast reroute technique that may be deployed at the edge of a network having first and second edge devices coupled to a neighboring routing domain. In accordance with the inventive technique, if the first edge device detects a node or link failure that prevents it from communicating with the neighboring domain, the first edge device reroutes at least some data packets addressed to the neighboring domain to the second edge device. As such, loops are avoided at the edge of the network and packets are rerouted to the neighboring routing domain faster and more efficiently than in prior implementations.

CN1921456A discloses a label exchange path protective method and relative system, to make the RSVP node able to NNHOP protect the ascending LSP. Wherein, in the RRO Node list sent to descending one, each ascending RSVP node sets interface type mark in relative RRO Node of each interface, and each descending RSVP node receives ascending RRO Node list, based on said interface type mark to find the nearest second RRO Node relative to the outlet, and based on the protective mark of RRO Node to set NNHOP protection on LSP. The invention can set interface type mark that recognizes if the RRO Node is relative to the inlet interface in RRO Node, and the RSVP node by exclusive method finds the outlet interface that if the RRO Node is not IPv6 and not RSVP node mark, it is not relative to the inlet interface but the outlet interface.

CN1816040A discloses a multi-protocol label exchange-network protection switching-over method. The method includes steps: building working label switching path (LSP) and protective LSP between inlet label switching route (LSR) and outlet LSR; building fast rerouting (FRR) LSP for a part to be protected in working LSP; through working LSP, inlet LSR sends working flow to outlet LSR, and inserts detection message; if inlet LSR connected to FRRLSP has tested that fault occurs at working LSP, then inlet node switches working flow to FRRLSP from working LSP; if outlet LSR could not receive detection message, then the outlet LSR through inversion route sends message of backward indication of defects to inlet LSR, thus, inlet LSR switches working flow to protective LSR. The invention guarantees protective switching speed of LSP, and increase quantity of protective LSP, saves network bandwidth. The method assures use of normal service, but does not cause overweight burden on CPU.

CN1738286A discloses a method for realizing the re-route in IP network, whose core comprises: setting the port from the original network node to the next network node in the route which is from the original network node to preset target address as the protected port, setting the back-up port of protected port according to the protocol, then, the network node transmits the data message to preset target address according to the protected port and the back-up port. The invention utilizes the protocol to automatically set the back-up port of protected port, which improves the switching speed of protecting port and avoids the pack-lose phenomenon coursed by that the back-up port has accidence before the protected port has accidence. In addition, the invention can apply complex network topology; realize the chain circuit protection, node protection and the whole path protection. At last, the invention simplifies the process of re-route, reduces the cost of network device and improves the reliability of network.

US2007/070909A1 discloses a network resilient to at least two points of failure comprises a plurality of nodes. A first path between a source node and a destination node is determined and a second path between a source node and a destination node is determined. The first and second paths are node-disjoint.

KR20030001635A discloses a method for setting a traffic path for a protection switching in an MPLS (Multi-Protocol Label Switching) data communication network.The method is provided to reduce the use of a bandwidth by selecting a repair node among route LSRs (Label Switching Routers) which pass a primary LSP (Label Switched Path) and setting a backup path from an ingress node to the repair node and a backup path from the repair node to an egress node.

The existing traffic fast ReRoute technique is unable to handle double link failures, especially when a point of local repair (PLR) or a merge point (MP) is protected by a bypass tunnel (i.e., nested protection), the existing traffic fast ReRoute mechanism is unable to provide protection. The nested protection refers to that a PLR or an MP is protected by a bypass tunnel.

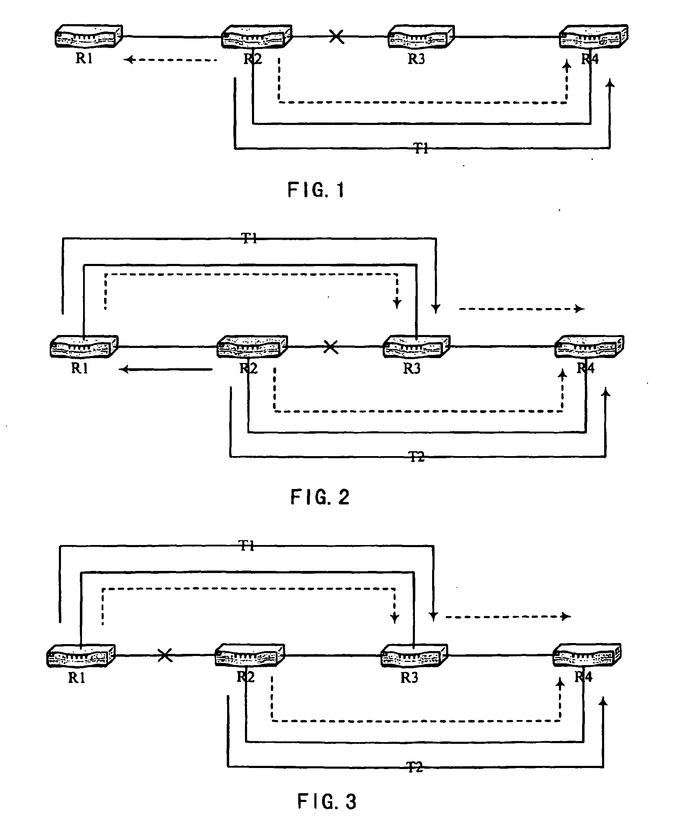

The existing traffic fast ReRoute mechanism describes a simple protection method, as shown in FIG. 1.

In FIG. 1, by establishing a bypass tunnel when a link R2-R3 is in a normal state, protection can be provided to the protected tunnel when the link R2-R3 fails. Once the link R2-R3 fails, R2 may immediately switch all the traffic on the protected tunnel to the bypass tunnel. R2 herein is referred to as a point of local repair (PLR). In addition, R2 may send a PathErr (path error) message whose error code is 25 (which indicates "notify") and error value is 3 (which indicates that "tunnel is protected locally") to a head-end node R1. The message may trigger R1 to attempt to establish an end-to-end LSP to replace the protected LSP. When R2 is rerouting the traffic to the bypass tunnel, R2 may at the same time deliver a Path message via the bypass tunnel to the downstream to refresh the path states for the downstream. Node R4, which serves as a merge point for the bypass tunnel and the protected tunnel, is referred to as an MP.

The preceding existing fast ReRoute mechanism is unable to handle a situation that the PLR itself is protected by a node, for instance, when PLR is protected by a bypass tunnel node, as illustrated in FIG. 2.

The primary tunnel goes through a path R1, R2, R3 and R4. R1 provides node protection for a next hop node R2 by way of a bypass tunnel T1 (path R1-R3). R2 provides node protection for a next hop node R3 by way of a bypass tunnel T2 (path R2-R4).

When the link R2-R3 fails, R2 may send a Path message via T2 and R1 also receives a PathEnr message from R2. All the traffic and the messages on the control plane are sent by R2 via T2. Therefore, R3 may face a Path state timeout and will delete the local states. In addition, the exclusion of R3 from the data path implies that all the fast ReRoute (FRR) binding where R3 acts as the MP or the PLR are invalid. Therefore, R1 should update its local states and unbind T1 binding. (this action may be triggered by a reserve (Resv) message updating a record route object (RRO) of downstream path and by an FRR timer re-estimating the binding relation with T1). Then, R1 may attempt to search for another suitable bypass tunnel. During the time after R3 deletes its local states and R1 is able to find a substituted binding, the protected tunnel will remain in an unprotected state. Therefore, link protection may not be achieved effectively.

Another situation is that if the link R2-R3 fails, R1-R2 may also fail immediately. R1 may send a Path message to R3 via T1. After receiving the Path message, R3 may in turn send a Path refresh message to R4. Similarly, R2 may also send a Path message to R4 via T2. After receiving the Path message, R4 may recognize that it is an MP of the protected tunnel. According to the existing fast ReRoute technique, MP may decide to discard the Path message received from the protected tunnel. Therefore, when receiving the Path message of the protected tunnel from R3, R4 may discard this Path message. This situation is unacceptable because the data plane, in this situation, goes via R1, R3 and R4.

In another example, MP is protected by a bypass tunnel node, as illustrated in FIG. 3.

The primary tunnel goes through path R1, R2, R3 and R4. R1 provides node protection for a next hop node R2 by way of a bypass tunnel T1 (path R1, R3). R2 provides node protection for a next hop node R3 by way of a bypass tunnel T2 (path R2, R4).

Considering the situation when the R1 performs fast ReRoute and switches to T1, R2 may maintain the binding relation with T2 until the state of R2 expires. If the link R2-R3 fails within this period, R2 may send a Path message via T2 to R4. R4 will receive this Path message. In this case, the path of the control plane and the path of the data plane are not consistent with each other, which is unacceptable.

In conclusion, the conventional fast ReRoute mechanism is unable to address the problem that two links which connect to a same node fail simultaneously in the case of nested protection.

### SUMMARY

A method and label switching router for fast rerouting are provided according to various embodiments of the present invention. Accordingly, the problem that adjacent double link failure in the case of nested protection can be solved.

The embodiments of the present invention can be implemented according to the following technical solutions.

A method for fast ReRoute is provided according to an embodiment of the present invention. The method includes:
determining, after a downstream merge point receives a path message, whether the path message is received via a bypass tunnel; if the path message is received via a bypass tunnel, the method further comprises: determining whether a protected tunnel passes through a head-end node of the bypass tunnel where the current node is the merge point; discarding the path message if the protected tunnel does not pass through the head-end node; accepting the path message if the protected tunnel passes through the head-end node; if the path message is received via a normal path which is not a bypass tunnel, the method further comprises: determining if a head-end node of a bypass tunnel which is currently in use is in a route record object of the path message received from the normal path; accepting the path message if the head-end node is not in the record route object; discarding the path message received from the normal path if the head-end node is in the record route object;
updating, by the downstream merge point, the record route object based on the situation of receiving the path message.

A label switching router is provided according to the embodiments of the present invention. The label switching router includes:
a path message determining module, configured to determine, after receiving a path message, whether the path message is received from a bypass tunnel;
a first determining module, configured to receive a determination result from the path message determining module, where if the determination result indicates that the path message is received from the bypass tunnel, the first determining module determines whether the protected tunnel passes through a head-end node of the bypass tunnel;
a second determining module, configured to receive a determination result from the path message determining module, where if the determination result indicates that the path message is received from a normal path which is not a bypass tunnel, the second determining module determines whether a head-end node of the bypass tunnel currently in use is in a route record object of the path message sent via the normal path;
a path message processing module, configured to discard the path message sent via the bypass tunnel when it is determined, based on determination results from the first determining module and the second determining module, that the protected tunnel does not pass through the head-end node of the bypass tunnel or that the head-end node of the bypass tunnel currently in use is not in the record route object of the path message sent via the normal path.

As can be seen from the above technical solutions provided according to embodiments of the present invention, by changing the process of the node handling the path error message and the path message, the present invention effectively handles the situation where adjacent double links fail in the case of nested protection. Therefore, the fast ReRoute technique is refined and the stability of the label switching router is enhanced.

### BRIEF DESCRIPTION OF THE DRAWINGS

FIG. 1 is a schematic diagram of a conventional protection method;
FIG. 2 is a schematic diagram illustrating fast ReRoute when a PLR is protected according to conventional arts;
FIG. 3 is a schematic diagram illustrating fast ReRoute when an MP is protected according to conventional arts;
FIG. 4 is a schematic diagram illustrating the processing of an upstream node on a failed link during node protection according to a first embodiment of the present invention;
FIG. 5 is a schematic diagram illustrating the processing of a downstream node on a failed link during node protection according to a first embodiment of the present invention;
FIG. 6 is a first diagram of link protection according to a second embodiment of the present invention;
FIG. 7 is a second diagram of link protection according to a second embodiment of the present invention;
FIG. 8 is a schematic diagram of blocks according to a third embodiment of the present invention; and
FIG. 9 is a schematic diagram of blocks according to a fourth embodiment of the present invention.

### DETAILED DESCRIPTION

The detailed description of various embodiments of the present invention is provided below in connection with the accompany drawings.

By changing the processes that the node processes the PathErr message and processes the Path message of the protected tunnel, the problem that two adjacent links fail simultaneously in the case of nested protection can be solved.

The method for the node to process the received PathErr message and the Path message of the protected tunnel according to an embodiment of the present invention includes the followings.
1) Process of handling a PathErr message: When a certain node receives a PathErr message with error code which indicates that "the tunnel is protected locally", the node checks whether it is a PLR based on a node protected bypath tunnel. If so, the node may then check the validity of the egress of the bypass tunnel, i.e., check to see whether the egress of the bypass tunnel is on the path where the data stream passes. If the egress of the bypass tunnel is not on the pass where the data stream passes, it is determined that the egress of the bypass tunnel is invalid. If the egress of the bypass tunnel is on the pass where the data stream passes, it is determined that the egress of the bypass tunnel is valid. If the egress of the bypass tunnel is invalid, the binding with the bypass tunnel is released; if the egress of the bypass tunnel is valid, the binding is remained. If the node is not a PLR, the process may omit this determination step.
2) Process of handling a Path message of the protected tunnel: When a certain node first receives a Path message of the protected tunnel from a certain bypass tunnel, the node checks whether the protected tunnel passes through a head-end node of this bypass tunnel (e.g., by utilizing the RRO saved in the local Path state). If the protected tunnel does not pass through the head-end node, the Path message is discarded; if the protected tunnel passes through the head-end node, the Path message is accepted. When a certain node is an MP and it receives the Path message from a normal path (not a bypass tunnel), the node checks whether the head-end node of the bypass tunnel which is now in use is in the RRO carried by the Path message. If the head-end node is in the RRO, the Path message is just a refresh message generated by a node on the upstream which is bypassed. Hence, the Path message can be discarded. If not, it means that another FFR occurs on the upstream. As a result, the head-end node of the bypass tunnel currently in use is bypassed. Thus, this new Path message should be accepted and the RRO in the Path State Block (PSB) should be updated. At the same time, a sign bit indicating that the current node is the MP of the protected tunnel is removed.

Detailed introduction is made to the method of the present invention in connection with the detailed embodiments.

First Embodiment: process of handling an upstream node when the link fails. The upstream node changes the processing of the PathErr message and timely releases the binding with the bypass tunnel.

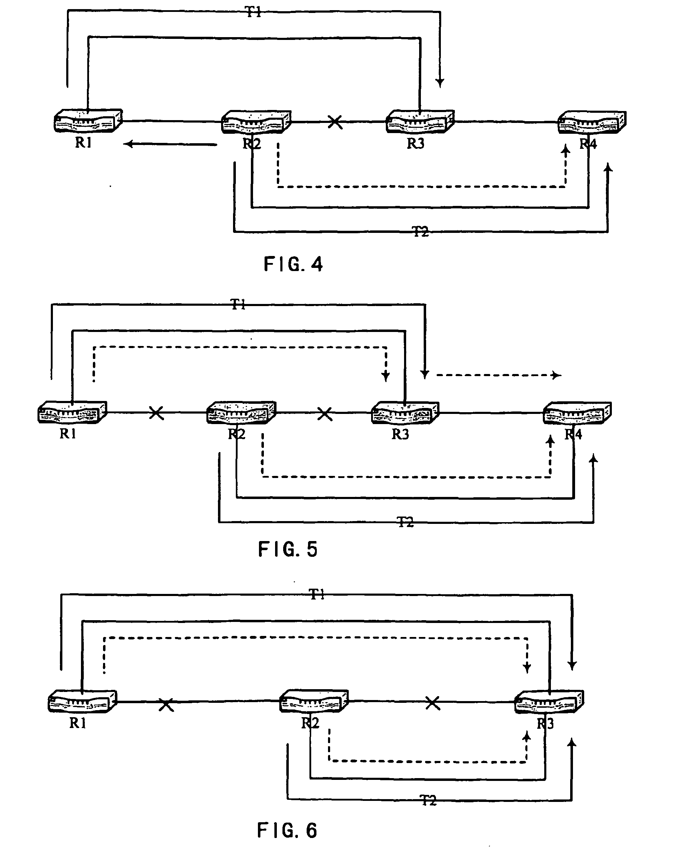

As illustrated in FIG. 4, the dashed line in FIG. 4 indicates the transmission direction of the path message. R1 to R4 is a tunnel to be protected. The primary tunnel passes through R1, R2, R3, and R4. R1 provides node protection for a next hop node R2 via the bypass tunnel T1 (path R1, R3). R2 provides node protection for a next hop node R3 via the bypass tunnel T2 (path R2, R4). When the link R2-R3 fails, the process includes the following steps.

When the link R2-R3 fails, R2 sends the upstream a PathErr message with error code which indicates "notify" and error value which indicates that "the tunnel is protected locally" to R1.

After R1 receives the message, R1 determines whether R1 itself is the PLR based on the node protection bypass tunnel. If R1 is the PLR based on the node protection bypass tunnel, the R1 may re-evaluate the binding relation between the protected tunnel and the bypass tunnel. If R1 is not the head-end node of the protected tunnel, the evaluation procedure is not performed and the message is directly forwarded to an upstream node until the PLR based on the node protection bypass tunnel is reached.

When R1 provides node protection for a next hop node on the path, R1 may check the validity of the egress of the bypass tunnel.

If R1 detects that the next node R2 is performing a fast ReRoute and has already bypassed via T2 the egress R3 of the bypass tunnel T1 of the current node R1, R1 may delete the binding relation with the primary tunnel and update the sign bit in RRO (i.e., delete the sign bit indicating that R1 is PLR).

R1 looks for another bypass tunnel which is suitable in a new environment. If R1 finds such bypass tunnel, binding relation may be formed immediately for providing protection for the link R1-R2. When the link R1-R2 fails, the traffic may pass along the new bypass tunnel.

According to the preceding process, by changing the handling process of the PathErr message of the upstream node on the failed link, the upstream node may be able to find a correct binding relation immediately (as long as there is another suitable bypass tunnel) for providing protection for the upstream link of the failed link. Consequently, the problem that the upstream link of the failed link is not properly protected when waiting for the binding relation re-evaluation timer or during the RRO triggering period after receiving downstream update can be avoided.

The above operation is a process of handling an upstream node on a failed link when an error occurs on a link. If an adjacent link of the failed link fails at the same time, the operation on the upstream node on the failed link may adopt the above described method. The operation on the downstream node on the failed link is as follows. After the downstream node receives the Path message of the protected tunnel passing through the bypass tunnel, the downstream node may check whether the protected tunnel passes through a head-end node of this bypass tunnel. If the protected tunnel passes through a head-end node of this bypass tunnel, the process proceeds to handle this Path message; if the protected tunnel does not pass through a head-end node of this bypass tunnel, the Path message is regarded as invalid and is discarded.

As illustrated in FIG. 5, the dashed line indicates the transmission direction of the path message. R1 to R4 is a tunnel to be protected. The primary tunnel passes through R1, R2, R3, and R4. R1 provides node protection for a next hop node R2 via the bypass tunnel T1 (path R1, R3). R2 provides node protection for a next hop node R3 by way of a bypass tunnel T2 (path R2, R4). The operation is detailed as follows.

First, when the link R1-R2 fails, R1 performs a fast ReRoute and switches the traffic to T1. Data will no longer go by R2. In the process, the operations on the upstream node on the link R1-R2 is similar to the operations described in FIG. 4.

When R1 performs a fast rerouting, R1 sends a Path refresh message of the protected tunnel to R3 which then forwards to R4. Thus, the RRO in the Path states of R4 becomes {R1,R3,R4}.

Then, if the link R2-R3 fails, R2 may attempt to perform fast rerouting. R2 sends a Path message of the protected tunnel to R4 via the bypass tunnel T2. R4 checks whether the protected tunnel passes through the head-end node R2 of the bypass tunnel T2. Because R2 is not in the RRO of R4, R4 may no longer receive the Path message from R2 and may discard this Path message.

In the above process, the link R1-R2 fails before the link R2-R3 fails. If the link R2-R3 fails before the link R1-R2 fails, the process is described as follows.

Still referring to FIG. 5, the dashed line indicates the transmission direction of the path message. R1 to R4 is a tunnel to be protected. The primary tunnel passes through R1, R2, R3, and R4. R1 provides node protection for a next hop node R2 via the bypass tunnel T1 (path R1, R3). R2 provides node protection for a next hop node R3 via the bypass tunnel T2 (path R2, R4).

First, when the link R2-R3 fails, R2 performs a fast ReRoute and switches the traffic to T2. Data will no longer go by R3. R2 may send the Path message of the protected tunnel to R4 via T2. At this point, R4 may add an MP sign bit for the current node. Similar to the description of the upstream handling process, R2 may send a PathErr message to the upstream node. After the upstream node R1 receives the PathErr message from R2, R1 may attempt to release the binding with T1. If the link R1-R2 fails before R1 receives the PathErr message from R2, R1 may send a Path message of the protected tunnel via T1 because the binding relation between R1 and T1 is still valid. After R3 receives this Path message, R3 may send a Path refresh message of the protected tunnel to R4. Because the link R3-R4 is not a bypass tunnel, R4 may receive the Path refresh message of the protected tunnel from R3. Then, R4 may determine whether the head-end node R2 of the bypass tunnel T2 currently in use is in the RRO carried in the Path message. Because the head-end node R2 is not in the RRO, the Path message from R2 is not accepted and the RRO in the local Path states is updated and the sign bit indicating that the current node is the MP may be deleted. From then on, all of the Path messages of the protected tunnel received from T2 are discarded.

The above process changes the criteria in determining whether the downstream node MP receives the Path message of the protected tunnel sent via the bypass tunnel. When the protected path does not pass through the head-end node of the bypass tunnel receiving the Path message, this Path message is discarded. Hence, the control message and the traffic are guaranteed to go through the same path, thus avoiding the situation that the node processes incorrect control messages, which may affect the normal traffic forwarding.

### Second Embodiment: handling process in the case of link nested protection

The method according to the first embodiment applies to the link nested protection. The operation principle is the same. Description will be made in connection with detailed embodiments.

As illustrated in FIG. 6, the dashed line indicates transmission direction of the path message. R2 is a head-end node of the link protected bypass tunnel T2. Also, R2 is protected by a node in the bypass tunnel T1. When the link R2-R3 fails, R2 may send a Path message to R3 via T2. Meanwhile, R2 may also send a PathErr message to R1 to inform to perform a fast rerouting. R1 may re-evaluate the binding relation between the protected tunnel and the bypass tunnel T1 and find out that R3 can still act as MP. Therefore, this binding relation will not be deleted. At this moment, if the link R1-R2 fails, R3 receives a Path message from T1. Because the head-end node (R1) of the bypass tunnel where this Path message passes is in the RRO of the local Path states of R3, this Path message should be accepted and the RRO in the Path states of R3 is update to {R1,R3}. Subsequently, if the Path message is received from R2 via T2, this message will be discarded because R2 is not in the RRO of the Path states. Therefore, the final path is {R1,R3}.

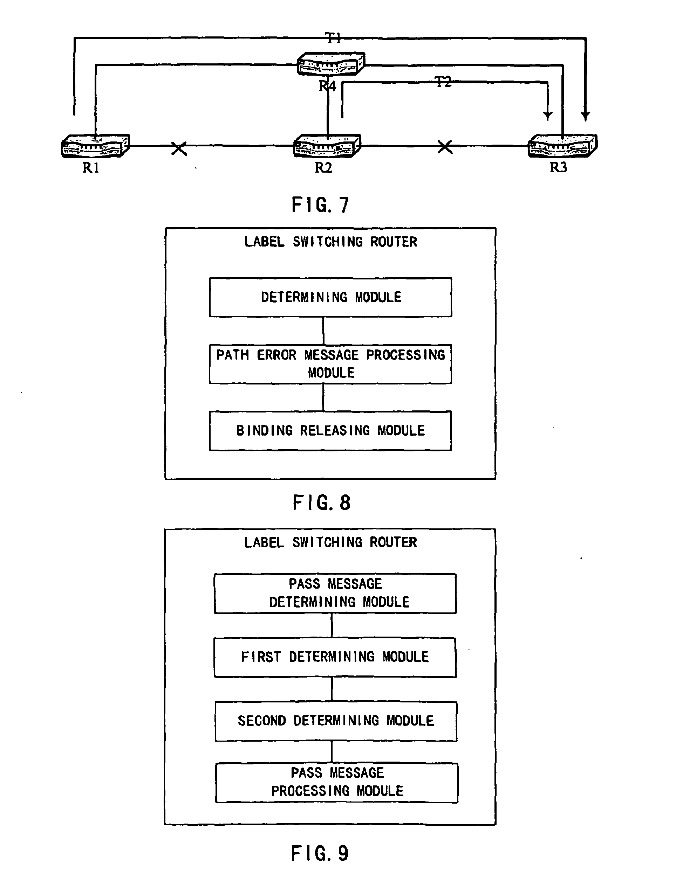

Another instance as shown in FIG. 7 is provided. This instance differs with the instance illustrated in FIG. 6 only in its topology. The specific link protection process and the post-failure process are similar, which are omitted herein for brevity.

A label switching router is provided according to a third embodiment of the present invention, as illustrated in FIG. 8. The label switching router includes at least:
a determining module, configured to determine, after receiving a PathErr message, whether the current node is a PLR based on the link protected or node protection bypass tunnel;
a path error message processing module, configured to receive a determination result from the determining module. When the current node is the PLR based on the link protected or node protection bypass tunnel, the validity of the bypass tunnel is checked after the PathErr message is received. In other words, it is checked whether the egress of the bypass tunnel is on the path where the data stream passes;
a binding releasing module, configured to receive the processing result from the path error message processing module, where the binding with the bypass tunnel is released when the link failure message processing module detects that the egress of the bypass tunnel is invalid, i.e., the egress is not on the path where the data stream passes.

The label switching router according to the present embodiment is an upstream node on a failed link. By changing the PathErr message handling process and by timely deleting the binding with the bypass tunnel for re-establishing a new suitable binding relation, the problem that link failure occurs on the downstream link first when the downstream PLR is protected in an nested way can be solved.

A label switching router is provided according to a fourth embodiment of the present invention, as illustrated in FiG. 9. The label switching router includes:
a path message determining module, configured to determine, after receiving a path message, whether the path message is received from a bypass tunnel ;
a first determining module, configured to receive a determination result from the path message determining module, where if the determination result indicates that the path message is received from the bypass tunnel, the first determining module determines whether the protected tunnel passes through a head-end node of the bypass tunnel;
a second determining module, configured to receive a determination result from the path message determining module, where if the determination result indicates that the path message is received from a normal path which is not a bypass tunnel, the second determining module determines whether the head-end node of the bypass tunnel currently in use is in a route record object of the path message sent by the normal path;
a path message processing module, configured to discard the path message sent via the bypass tunnel when it is determined based on the determination results from the first determining module and the second determining module that the protected tunnel does not pass through the head-end node of the bypass tunnel or that the head-end node of the bypass tunnel currently in use is not in the record route object of the path message sent via the normal path.

The label switching router according to the present embodiment is a downstream node of the failed link. By changing the determination criteria on the Path message and discarding invalid Path messages, the problem that two links adjacent to the PLR fail simultaneously (or within a very short time interval) or the upstream link adjacent to the PLR fails first when the downstream PLR is protected by a node can be solved.

Because a node may act as not only an upstream node on a failed link but also a downstream node of another failed link, the above modules may be provided together on one label switching router.

Overall, the embodiment of the present invention effectively solves adjacent double link failure in the case of the nested protection, the problem that failures concur (or within a very short time interval) on two links adjacent to PLR or MP when a PLR or an MP is protected can be solved. The fast ReRoute technique is refined and the stability of the label switching router is enhanced.

The foregoing is merely exemplary embodiments of the present invention, and the scope of the present invention is not so limited. Any variations or equivalents can be readily appreciated by those skilled in the art. These variations or equivalents shall be construed as fall within the scope of the present invention. Therefore, the scope of the present invention should be determined by the scope of the claims.

## Claims

1. A method for fast rerouting, comprising:
determining, after a downstream merge point (R4) receives a path message, whether the path message is received via a bypass tunnel;
if the path message is received via a bypass tunnel, the method further comprises:
determining whether a protected tunnel passes through a head-end node (R2) of the bypass tunnel (T2) where the current node is the merge point;
discarding the path message if the protected tunnel does not pass through the head-end node;
accepting the path message if the protected tunnel passes through the head-end node;
if the path message is received via a normal path which is not a bypass tunnel, the method further comprises:
determining if a head-end node of a bypass tunnel which is currently in use is in a record route object of the path message received from the normal path;
discarding the path message if the head-end node is not in the record route object;
updating, by the downstream merge point, the record route object based on the situation of receiving the path message.

2. The method of claim 1, **characterized by** further comprising:
sending, by a point of local repair of a link, a path error message to an upstream node when a failure occurs on the link in the case of a fast ReRoute protection.

3. The method of claim 2, **characterized by** further comprising:
detecting whether an egress of the bypass tunnel is on a path where a data stream passes after an upstream point of local repair receives the path error message; releasing the binding with the bypass tunnel if the egress is not on the path where the data stream passes; remaining the binding if the egress is on the path where the data stream passes.

4. The method of claim 3, **characterized by** further comprising: continuing to forward the path error message to the upstream until the path error message reaches the head-end node of the protected tunnel if the upstream node is not the head-end node of the currently protected tunnel.

5. The method of claim 3, **characterized by** further comprising:
searching for another suitable bypass tunnel after the upstream point of local repair releases the binding with the bypass tunnel.

6. The method of any one of claims 1 to 5, **characterized in that**, the determining whether the protected tunnel passes through a head-end node of the bypass tunnel where the current node is the merge point further comprises:
checking whether the head-end node of the bypass tunnel is in the record route object of the local path states of the downstream merge point.

7. The method of claim 1, **characterized in that**, after the downstream merge point receives the path message received from the normal path which is not a bypass tunnel and confirms to accept the path message, the method further comprises:
deleting, by the downstream merge point, a sign bit indicating that the current node is a merge point.

8. The method of claim 1, **characterized by** further comprising discarding the path message received from the normal path if the head-end node is in the record route object.

9. The method of claim 1, **characterized in that**, updating, by the downstream merge point, the record route object based on the situation of receiving the path message comprises:
updating, by the downstream merge point, the record route object when the path message is received via the normal path and the path message is accepted.

10. A label switching router, comprising:
a path message determining module, configured to determine, after receiving a path message, whether the path message is received from a bypass tunnel;
a first determining module, configured to receive a determination result from the path message determining module, wherein if the determination result indicates that the path message is received from the bypass tunnel, the first determining module determines whether the protected tunnel passes through a head-end node, (R2), of the bypass tunnel, (T2);
a second determining module, configured to receive a determination result from the path message determining module, wherein if the determination result indicates that the path message is received from a normal path which is not a bypass tunnel, the second determining module determines whether a head-end node, (R2), of the bypass tunnel, (T2), currently in use is in a record route object of the path message sent via the normal path;
a path message processing module, configured to discard the path message sent via the bypass tunnel when it is determined, based on determination results from the first determining module and the second determining module, that the protected tunnel does not pass through the head-end node of the bypass tunnel and configured to discard the path message received from a normal path when the head-end node of the bypass tunnel currently in use is not in the record route object of the path message sent via the normal path.

11. The label switching router of claim 10, **characterized by** further comprising:
a determining module, configured to determine, after receiving a path error message, whether the current node is a point of local repair based on a node protection bypass tunnel;
a path error message processing module, configured to receive a determination result from the determining module, wherein if the current node is the point of local repair based on the node protection bypass tunnel, the path error message processing module checks the validity of the bypass tunnel after receiving the path error message;
a binding releasing module, configured to receive a processing result from the path error message processing module and release a binding with the bypass tunnel when it is determined that the egress of the bypass tunnel is invalid.

## Patentansprüche

1. Verfahren zum schnellen Umleiten, umfassend:
Bestimmen, nachdem ein *Downstream*-Zusammenführungspunkt (R4) eine Pfadnachricht empfängt, ob die Pfadnachricht über einen Umlenktunnel empfangen wird;
falls die Pfadnachricht über einen Umlenktunnel empfangen wird, umfasst das Verfahren weiterhin:
Bestimmen, ob ein geschützter Tunnel durch einen *Head-End-*Knoten (R2) des Umlenktunnels (T2) verläuft, wo der aktuelle Knoten der Zusammenführungspunkt ist;
Verwerfen der Pfadnachricht, falls der geschützte Tunnel nicht durch den *Head-End-*Knoten verläuft;
Akzeptieren der Pfadnachricht, falls der geschützte Tunnel durch den *Head-End-*Knoten verläuft;
falls die Pfadnachricht über einen normalen Pfad, der kein Umlenktunnel ist, empfangen wird, umfasst das Verfahren weiterhin:
Bestimmen, ob ein *Head-End*-Knoten eines Umlenktunnels, der aktuell verwendet wird, in einem *Record-Route*-Objekt der vom normalen Pfad empfangenen Pfadnachricht ist;
Verwerfen der Pfadnachricht, falls der *Head-End-*Knoten nicht im *Record-Route-*Objekt ist;
Aktualisieren des *Record-Route*-Objekts durch den *Downstream-*Zusammenführungspunkt auf der Grundlage der Situation des Empfangens der Pfadnachricht.

2. Verfahren nach Anspruch 1, **dadurch gekennzeichnet, dass** es weiterhin umfasst:
Senden einer Pfadfehlernachricht durch einen Punkt lokaler Reparatur eines Links an einen *Upstream*-Knoten, wenn auf dem Link ein Fehler im Fall eines schnellen *ReRoute*-Schutzes auftritt.

3. Verfahren nach Anspruch 2, **dadurch gekennzeichnet, dass** es weiterhin umfasst:
Bestimmen, ob ein Ausgang des Umlenktunnels auf einem Pfad ist, wo ein Datenstrom passiert, nachdem ein *Upstream*-Punkt lokaler Reparatur die Pfadfehlernachricht empfängt; Freigeben der Bindung mit dem Umlenktunnel, falls sich der Ausgang nicht auf dem Pfad befindet, wo der Datenstrom passiert; Beibehalten der Bindung, falls sich der Ausgang auf dem Pfad befindet, wo der Datenstrom passiert.

4. Verfahren nach Anspruch 3, **dadurch gekennzeichnet, dass** es weiterhin umfasst: Fortsetzen der aufwärts gerichteten Weiterleitung der Pfadfehlernachricht, bis die Pfadfehlernachricht den *Head-End*-Knoten des geschützten Tunnels erreicht, falls der *Upstream*-Knoten nicht der *Head-End*-Knoten des aktuell geschützten Tunnels ist.

5. Verfahren nach Anspruch 3, **dadurch gekennzeichnet, dass** es weiterhin umfasst:
Suchen nach einem anderen, geeigneten Umlenktunnel, nachdem der *Upstream-*Punkt lokaler Reparatur die Bindung mit dem Umlenktunnel freigibt.

6. Verfahren nach einem der Ansprüche 1 bis 5, **dadurch gekennzeichnet, dass** das Bestimmen, ob der geschützte Tunnel durch einen *Head-End*-Knoten des Umlenktunnels verläuft, wo der aktuelle Knoten der Zusammenführungspunkt ist, weiterhin umfasst:
Prüfen, ob der *Head-End*-Knoten des Umlenktunnels im *Record-Route*-Objekt der lokalen Pfadzustände des *Downstream*-Zusammenführungspunkts ist.

7. Verfahren nach Anspruch 1, **dadurch gekennzeichnet, dass**, nachdem der *Downstream*-Zusammenführungspunkt die Pfadnachricht, die vom normalen Pfad, der kein Umlenktunnel ist, empfangen wird, empfängt und bestätigt, die Pfadnachricht zu akzeptieren, das Verfahren weiterhin umfasst:
Löschen eines Vorzeichenbits, das anzeigt, dass der aktuelle Knoten ein Zusammenfiihrungspunkt ist, durch den *Downstream*-Zusammenführungspunkt.

8. Verfahren nach Anspruch 1, **dadurch gekennzeichnet, dass** es weiterhin ein Verwerfen der vom normalen Pfad empfangenen Pfadnachricht umfasst, falls der *Head-End*-Knoten im *Record-Route*-Objekt ist.

9. Verfahren nach Anspruch 1, **dadurch gekennzeichnet, dass** das Aktualisieren des *Record-Route*-Objekts durch den *Downstream*-Zusammenführungspunkt auf der Grundlage der Situation des Empfangens der Pfadnachricht umfasst:
Aktualisieren des *Record-Route*-Objekts durch den *Downstream-*Zusammenführungspunkt, wenn die Pfadnachricht über den normalen Pfad empfangen wird und die Pfadnachricht akzeptiert wird.

10. *Label Switching Router*, umfassend:
ein Pfadnachrichtbestimmungsmodul, der konfiguriert ist, zu bestimmen, ob nach dem Empfang einer Pfadnachricht die Pfadnachricht von einem Umlenktunnel empfangen wird;
ein erstes Bestimmungsmodul, der konfiguriert ist, ein Bestimmungsergebnis vom Pfadnachrichtbestimmungsmodul zu empfangen, wobei, falls das Bestimmungsergebnis anzeigt, dass die Pfadnachricht vom Umlenktunnel empfangen wird, das erste Bestimmungsmodul bestimmt, ob der geschützte Tunnel durch einen *Head-End*-Knoten (R2) des Umlenktunnels (T2) verläuft;
ein zweites Bestimmungsmodul, der konfiguriert ist, ein Bestimmungsergebnis vom Pfadnachrichtbestimmungsmodul zu empfangen, wobei, falls das Bestimmungsergebnis anzeigt, dass die Pfadnachricht von einem normalen Pfad, der kein Umlenktunnel ist, empfangen wird, das zweite Bestimmungsmodul bestimmt, ob ein *Head-End-*Knoten (R2) des Umlenktunnels (T2), der aktuell verwendet wird, in einem *Record-Route*-Objekt der über den normalen Pfad gesendeten Pfadnachricht ist;
ein Pfadnachrichtverarbeitungsmodul, der konfiguriert ist, die über den Umlenktunnel gesendeten Pfadnachricht zu verwerfen, wenn auf der Grundlage von Bestimmungsergebnissen vom ersten Bestimmungsmodul und dem zweiten Bestimmungsmodul bestimmt wird, dass der geschützte Tunnel nicht durch den *Head-End*-Knoten des Umlenktunnels verläuft, und konfiguriert ist, die von einem normalen Pfad empfangenen Pfadnachricht zu verwerfen, wenn der *Head-End-*Knoten des Umlenktunnels, der aktuell verwendet wird, nicht im *Record-Route-*Objekt der über den normalen Pfad gesendeten Pfadnachricht ist.

11. *Label Switching Router* nach Anspruch 10, **dadurch gekennzeichnet, dass** er weiterhin umfasst:
ein Bestimmungsmodul, der konfiguriert ist, zu bestimmen, ob nach dem Empfang einer Pfadfehlernachricht der aktuelle Knoten ein Punkt lokaler Reparatur auf der Grundlage eines Knotenschutz-Umlenktunnels ist;
ein Pfadfehlernachrichtverarbeitungsmodul, der konfiguriert ist, ein Bestimmungsergebnis vom Bestimmungsmodul zu empfangen, wobei, falls der aktuelle Knoten der Punkt lokaler Reparatur auf der Grundlage des Knotenschutz-Umlenktunnels ist, das Pfadfehlernachrichtverarbeitungsmodul die Gültigkeit des Umlenktunnels nach dem Empfang der Pfadfehlernachricht prüft;
ein Bindungsfreigabemodul, der konfiguriert ist, ein Verarbeitungsergebnis vom Pfadfehlernachrichtverarbeitungsmodul zu empfangen und eine Bindung mit dem Umlenktunnel freizugeben, wenn bestimmt wird, dass der Ausgang des Umlenktunnels ungültig ist.

## Revendications

1. Procédé de réacheminement rapide, comprenant :
déterminer, après qu'un point de fusion aval (R4) a reçu un message de chemin, si le message de chemin est reçu par l'intermédiaire d'un tunnel de dérivation ;
si le message de chemin est reçu par l'intermédiaire d'un tunnel de dérivation, le procédé comprend en outre :
déterminer si un tunnel protégé passe par un noeud récepteur (R2) du tunnel de dérivation (T2) où le noeud actuel est le point de fusion ;
rejeter le message de chemin si le tunnel protégé ne passe pas par le noeud récepteur ;
accepter le message de chemin si le tunnel protégé passe par le noeud récepteur ;
si le message de chemin est reçu par l'intermédiaire d'un chemin normal qui n'est pas un tunnel de dérivation, le procédé comprend en outre :
déterminer si un noeud récepteur d'un tunnel de dérivation qui est en cours d'utilisation se trouve dans un objet de route d'enregistrement du message de chemin reçu du chemin normal ;
rejeter le message de chemin si le noeud récepteur ne se trouve pas dans l'objet de route d'enregistrement ;
actualiser, par le point de fusion aval, l'objet de route d'enregistrement en fonction de la situation de réception du message de chemin.

2. Procédé selon la revendication 1, **caractérisé en ce qu'**il comprend en outre :
envoyer, par un point de réparation locale d'une liaison, un message d'erreur de chemin à un noeud amont quand une défaillance se produit sur la liaison dans le cas d'une protection de réacheminement rapide.

3. Procédé selon la revendication 2, **caractérisé en ce qu'**il comprend en outre :
détecter si une sortie du tunnel de dérivation se trouve sur un chemin où passe un train de données après qu'un point amont de réparation locale reçoit le message d'erreur de chemin ; libérer le lien avec le tunnel de dérivation si la sortie ne se trouve pas sur le chemin où passe le train de données ; maintenir le lien si la sortie se trouve sur le chemin où passe le train de données.

4. Procédé selon la revendication 3, **caractérisé en ce qu'**il comprend en outre: continuer l'acheminement du message d'erreur de chemin vers amont jusqu'à ce que le message d'erreur de chemin atteigne le noeud récepteur du tunnel protégé si le noeud amont n'est pas le noeud récepteur du tunnel en cours de protection.

5. Procédé selon la revendication 3, **caractérisé en ce qu'**il comprend en outre :
rechercher un autre tunnel de dérivation convenable après que le point amont de réparation locale libère le lien avec le tunnel de dérivation.

6. Procédé selon l'une quelconque des revendications 1 à 5, **caractérisé en ce que** l'étape consistant à déterminer si le tunnel protégé passe par un noeud récepteur du tunnel de dérivation où le noeud actuel est le point de fusion comprend en outre:
vérifier si le noeud récepteur du tunnel de dérivation se trouve dans l'objet de route d'enregistrement des états de chemin local du point de fusion aval.

7. Procédé selon la revendication 1, **caractérisé en ce que**, après que le point de fusion aval reçoit le message de chemin reçu du chemin normal qui n'est pas un tunnel de dérivation et confirme l'acceptation du message de chemin, le procédé comprend en outre:
supprimer, par le point de fusion aval, un bit de signe indiquant que le noeud actuel est un point de fusion.

8. Procédé selon la revendication 1, **caractérisé en ce qu'**il comprend en outre rejeter le message de chemin reçu du chemin normal si le noeud récepteur se trouve dans l'objet de route d'enregistrement.

9. Procédé selon la revendication 1, **caractérisé en ce que** l'étape consistant à actualiser, par le point de fusion aval, l'objet de route d'enregistrement en fonction de la situation de réception du message de chemin comprend :
actualiser, par le point de fusion aval, l'objet de route d'enregistrement quand le message de chemin est reçu par l'intermédiaire du chemin normal et le message de chemin est accepté.

10. Routeur à commutation d'étiquettes, comprenant :
un module de détermination de message de chemin, configuré pour déterminer, après avoir reçu un message de chemin, si le message de chemin est reçu d'un tunnel de dérivation ;
un premier module de détermination, configuré pour recevoir un résultat de détermination du module de détermination de message de chemin, dans lequel si le résultat de détermination indique que le message de chemin est reçu du tunnel de dérivation, le premier module de détermination détermine si le tunnel protégé passe par un noeud récepteur (R2) du tunnel de dérivation (T2) ;
un second module de détermination, configuré pour recevoir un résultat de détermination du module de détermination de message de chemin, dans lequel si le résultat de détermination indique que le message de chemin est reçu d'un chemin normal qui n'est pas un tunnel de dérivation, le second module de détermination détermine si un noeud récepteur (R2) du tunnel de dérivation (T2) en cours d'utilisation se trouve dans un objet de route d'enregistrement du message de chemin envoyé par le chemin normal ;
un module de traitement de message de chemin, configuré pour rejeter le message de chemin envoyé par l'intermédiaire du tunnel de dérivation quand il est déterminé, en fonction des résultats de détermination provenant du premier module de détermination et du second module de détermination, que le tunnel protégé ne passe pas par le noeud récepteur du tunnel de dérivation et configuré pour rejeter le message de chemin reçu d'un chemin normal quand le noeud récepteur du tunnel de dérivation en cours d'utilisation ne se trouve pas dans l'objet de route d'enregistrement du message de chemin envoyé par le chemin normal.

11. Routeur à commutation d'étiquettes selon la revendication 10, **caractérisé en ce qu'**il comprend en outre:
un module de détermination, configuré pour déterminer, après avoir reçu un message d'erreur de chemin, si le noeud actuel est un point de réparation locale en fonction d'un tunnel de dérivation de protection de noeud ;
un module de traitement de message d'erreur de chemin, configuré pour recevoir un résultat de détermination du module de détermination, dans lequel si le noeud actuel est le point de réparation locale en fonction du tunnel de dérivation de protection de noeud, le module de traitement de message d'erreur de chemin vérifie la validité du tunnel de dérivation après avoir reçu le message d'erreur de chemin ;
un module de libération de lien, configuré pour recevoir un résultat de traitement du module de traitement de message d'erreur de chemin et libérer un lien avec le tunnel de dérivation quand il est déterminé que la sortie du tunnel de dérivation n'est pas valable.
